(19)

Europäisches
Patentamt
European
Patent Office
Office européen
des brevets

(11) **EP 1 660 605 B1**

(12) **EUROPEAN PATENT SPECIFICATION**

(45) Date of publication and mention
of the grant of the patent:
**17.06.2009 Bulletin 2009/25**

(21) Application number: **04816167.3**

(22) Date of filing: **14.04.2004**

(51) Int Cl.:
*C09J 123/12* (2006.01)       *B32B 27/32* (2006.01)

(86) International application number:
**PCT/US2004/011597**

(87) International publication number:
**WO 2005/026281 (24.03.2005 Gazette 2005/12)**

(54) **STRETCHABLE HOT-MELT ADHESIVE COMPOSITION WITH TEMPERATURE RESISTANCE**

STRICKBARER SCHMELZKLEBER MIT TEMPERATURBESTÄNDIGKEIT

COMPOSITION ADHESIVE THERMOFUSIBLE ETIRABLE A RESISTANCE THERMIQUE

(84) Designated Contracting States:
**DE FR GB**

(30) Priority: **05.09.2003 US 655717**

(43) Date of publication of application:
**31.05.2006 Bulletin 2006/22**

(73) Proprietor: **KIMBERLY-CLARK WORLDWIDE, INC.**
**Neenah, WI 54956 (US)**

(72) Inventor: **ZHOU, Peiguang**
**Appleton, WI 54915 (US)**

(74) Representative: **Beacham, Annabel Rose**
**Frank B. Dehn & Co.**
**St Bride's House**
**10 Salisbury Square**
**London**
**EC4Y 8JD (GB)**

(56) References cited:
**WO-A-02/053667**       **WO-A-02/053668**
**WO-A-20/04039907**       **US-A- 4 135 037**
**US-A1- 2002 072 561**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Many personal care products include stretchable components. Some personal care products include one or more layers that can be stretched in all directions for better fit and comfort. Frequently, one or more components of a personal care product are adhesively bonded together. For example, adhesives have been used to bond individual layers of an absorbent article, such as a topsheet (also known as, for example, the body-side liner) and backsheet (also known as, for example, the outer cover), together. Adhesive has also been used to bond discrete pieces, such as fasteners and leg elastics, to the article. In many cases, the bonding together of components forms a laminated structure in which adhesive is positioned between materials (such as layers of polymer film and/or layers of woven or nonwoven fabrics) that make up the components being bonded together.

In many instances, a hot-melt adhesive, i.e., a polymeric formulation that is heated to substantially liquefy, the formulation prior to application to one or both components when bonding components or layers together, is used in making a personal care product. While such formulations generally work, they can be costly and their performance properties can be improved. For example, a number of hot-melt adhesives tend to "lock up" elastic laminates in the bonding joints, thereby inhibiting the stretch capability of the product. Furthermore, adhesive bonds in personal care products often fail at body temperature during loading. Some hot-melt adhesives even weaken after an initial stretch.

One particular type of personal care product application that includes stretchable components is a pant-like garment, such as a diaper, training pant, or adult incontinence product. These pant-like garments typically have stretchable ears or tabs for fastening the garment. An outer cover of the garment may also be stretchable. An adhesive used to bond the ears, or tabs, to the outer cover must be able to maintain its bond strength at body temperature in order to prevent the garment from falling apart during wear. Additionally, it is desirable that the adhesive does not inhibit stretchability of either the ears or the outer cover. Furthermore, it is important that the adhesive maintains its bond strength after initial stretching, since a garment is typically stretched during application and it is most vital that the adhesive maintains its bond strength after the garment is in place on a wearer.

There is thus a need or desire for an adhesive composition for use in stretchable adhesive applications, wherein the adhesive has a sufficient stretching ability and can maintain bond strength during and after stretching at body temperature. Laminated structures and personal care products employing such an adhesive composition would benefit from these improved characteristics. There is also a need or desire for efficient methods of making the adhesive composition, and efficient methods of making laminated structures and personal care articles employing the adhesive composition.

WO 02/053668 discloses adhesive compositions comprising selected ratios of crystalline and amorphous polymers.

US 4,135,037 discloses adhesive compositions comprising epoxidised rubbery copolymers and rosin-based tackifiers, the adhesives being useful in forming laminates.

WO 02/053667 discloses elastic attachment adhesive compositions of conventional rubber-based construction adhesive and a crystalline polymer.

SUMMARY OF THE INVENTION

The present invention is directed to adhesive compositions having high stretchability and sufficient bond strength that can withstand stretching at body temperature. The invention also includes laminates incorporating these adhesive compositions, and methods of making these adhesive compositions and laminates. The compositions and laminates are particularly suitable for use in personal care product applications, medical garment applications, and industrial workwear garment applications.

The adhesive compositions of the invention comprise 30 - 90% by weight of an atactic polymer having a degree of crystallinity of 20% or less selected from the group consisting of atactic polypropylene, polystyrene, polybutene, polyethylene, ethylene-propylene copolymer, and combinations thereof, 5 - 30% by weight of an isotactic polymer having a degree of crystallinity of 40% or greater and a melt index between 50 and 3000 grams per 10 minutes, as determined by ASTM D1238, 230°C/2.16 kg method and 2 - 20% by weight of an elastomeric base polymer comprising styrene present in an amount up to 45% by weight.

The compositions may also include a low softening point additive and/or other additives, such as an antioxidizing agent, a plasticizer, mineral oil, color pigment, filler, polymer compatibilizer, or a combination of any of these additives.

The atactic polymer has a degree of crystallinity of 20% or less and preferably has a number-average molecular weight between 1,000 and 300,000. Examples of suitable atactic polymers include atactic polypropylene, low density polyethylene, atactic polystyrene, atactic polybutene, amorphous polyolefin copolymer, and combinations thereof.

The isotactic polymer has a degree of crystallinity of 40% or greater and preferably has a number-average molecular weight between 3,000 and 200,000. Examples of suitable isotactic polymers include isotactic polypropylene, high density polyethylene, isotactic polystyrene, isotactic polybutene, and combinations thereof.

The atactic polymer suitably has a thermosel viscosity between about 500 and about 4000 mPa·s at 190 degrees Celsius as determined using ASTM D 3236. The isotactic polymer has a melt index between 50 and 3000 grams per 10 minutes, as determined using ASTM D 1238, 230°C/2.16 kg Method. The melt index is dependent upon the crystallinity, molecular weight, and molecular weight distribution of the polymers.

The elastomeric base polymer may include high melt-flow-rate styrene-isoprene-styrene multi-block copolymer (SIS), styrene-butadiene-styrene multi-block copolymer (SBS), styrene-ethylene-butene-styrene multi-block copolymer (SEBS), styrene-ethylene-propylene-styrene multi-block copolymer (SEPS), and combinations thereof.

The adhesive compositions suitably have a viscosity of about 1 to 8 Pa.s (1,000 to 8,000 cps) and between 149 and 182°C (300 and 360 degrees Fahrenheit). When applied to one or more substrates, the compositions suitably have substantial bond strength, and can maintain their bond strength even after stretching, even at body temperature (37 degrees Celsius, 100 degrees Fahrenheit).

Laminates can be formed using the adhesive compositions to bond together two layers of nonwoven material, woven material, hook material, film, or other facing materials, or elasticized components. The facing materials themselves may be laminates, such as necked-bonded laminates. Laminates including the adhesive compositions of the invention have significant temperature resistance and stretch capabilities compared to laminates including conventional adhesives.

The invention also includes a method of making these adhesive compositions and laminates. Conventional hot melt equipment can be used to process these compositions. The adhesive composition can be used to bond one or more facing layers together without compromising the stretchability of the facing layers.

With the foregoing in mind, it is a feature and advantage of the invention to provide adhesive compositions and laminates having high stretchability and sufficient bond strength that can withstand stretching at body temperature. The invention also includes methods of making such adhesive compositions and laminates.

## BRIEF DESCRIPTION OF THE DRAWINGS

These and other objects and features of this invention will be better understood from the following detailed description taken in conjunction with the drawings, wherein:

Figures 1A, 1B, and 1C give symbolic representations of syndiotactic, isotactic, and atactic configurations of a polymer.

Figure 2 gives a visual representation of a fringed-micelle model of a material having both amorphous and crystalline regions.

Figure 3 is a plan view of one embodiment of a laminate including an adhesive composition of the invention.

Figure 4 is a cross-sectional view, taken along line 4-4 of Fig. 3, of another embodiment of a laminate including an adhesive composition of the invention.

Figure 5 shows a schematic diagram of one version of a method and apparatus for preparing, processing, and delivering an adhesive composition.

Figure 6A shows a top view of a portion of one version of a laminate.

Figure 6B shows a sectional, perspective view of a test panel cut from one version of a laminate.

Figure 7 shows a schematic diagram of creep testing.

## DEFINITIONS

Within the context of this specification, each term or phrase below will include the following meaning or meanings.

"Bonded" refers to the joining, adhering, connecting, attaching, of at least two elements. Two elements will be considered to be bonded together when they are bonded directly to one another or indirectly to one another, such as when each is directly bonded to intermediate elements.

"Conventional hot-melt adhesive" means a formulation that generally comprises several components. These components typically include one or more polymers to provide cohesive strength (*e.g.*, aliphatic polyolefins such as poly (ethylene-copropylene) copolymer; ethylene vinyl acetate copolymers; styrene-butadiene or styrene-isoprene block copolymers; etc.); a resin or analogous material (sometimes called a tackifier) to provide adhesive strength (*e.g.*, hydrocarbons distilled from petroleum distillates; rosins and/or rosin esters; terpenes derived, for example, from wood or citrus, etc.); perhaps waxes, plasticizers or other materials to modify viscosity (*i.e.*, flowability) (examples of such materials include, but are not limited to, mineral oil, polybutene, paraffin oils, ester oils, and the like); and/or other additives including, but not limited to, antioxidants or other stabilizers. A typical hot-melt adhesive formulation might contain from 15 to 35 weight percent cohesive strength polymer or polymers; from 50 to 65 weight percent resin or other tackifier or tackifier; from more than zero to 30 weight percent plasticizer or other viscosity modifier; and optionally less than about 1 weight percent stabilizer or other additive. It should be understood that other adhesive formulations comprising different weight percentages of these components are possible.

"Elastic tension" refers to the amount of force per unit width required to stretch an elastic material (or a selected zone thereof) to a given percent elongation.

"Elastomeric" and "elastic" are used interchangeably to refer to a material or composite that is generally capable of recovering its shape after deformation when the deforming force is removed. Specifically, as used herein, elastic or elastomeric is meant to be that property of any material which, upon application of a biasing force, permits the material to be stretchable to a stretched biased length which is at least about 50 percent greater than its relaxed unbiased length, and that will cause the material to recover at least 40 percent of its elongation upon release of the stretching force. A hypothetical example which would satisfy this definition of a elastomeric material would be a 2.54 cm (one (1) inch) sample of a material which is elongatable to at least 3.81 cm (1.50 inches) and which upon being elongated to 3.81 cm (1.50 inches) and released, will recover to a length of less than 3.30 cm (1.30 inches).

Many elastic materials may be stretched by much more than 50 percent of their relaxed length, and many of these will recover to substantially their original relaxed length upon release of the stretching force.

"Elongation" refers to the capability of an elastic material to be stretched a certain distance, such that greater elongation refers to an elastic material capable of being stretched a greater distance than an elastic material having lower elongation. ,

"Film" refers to a thermoplastic film made using a film extrusion process, such as a cast film or blown film extrusion process. The term includes apertured films, slit films, and other porous films which constitute liquid transfer films, as well as films which do not transfer liquid.

"Garment" includes personal care garments, medical garments, industrial workwear garments. The term "disposable garment" includes garments which are typically disposed of after 1-5 uses. The term "personal care garment" includes diapers, training pants, swim wear, absorbent underpants, adult incontinence products, feminine hygiene products. The term "medical garment" includes medical (i.e., protective and/or surgical) gowns, caps, gloves, drapes, face masks. The term "industrial workwear garment" includes laboratory coats, cover-alls.

"High softening point tackifier" refers to a tackifier having a softening point above 80 degrees Celsius, and a viscosity of at least 1.5 Pa.s (1500 cps) at 182°C (360 degrees Fahrenheit) as measured by a ring and ball method (ASTM E-28).

"Hot-melt processable" means that an adhesive composition may be liquefied using a hot-melt tank (*i.e.*, a system in which the composition is heated so that it is substantially in liquid form) and transported via a pump (*e.g.*, a gear pump or positive-displacement pump) from the tank to the point of application proximate to a substrate or other material; or to another tank, system, or unit operation (*e.g.*, a separate system, which may include an additional pump or pumps, for delivering the adhesive to the point of application). Hot-melt tanks used to substantially liquefy a hot-melt adhesive typically operate in a range from about 93.3°C (200 degrees Fahrenheit) to about 204°C (400 degrees Fahrenheit).

Generally, at the point of application, the substantially liquefied adhesive composition will pass through a nozzle or bank of nozzles, but may pass through some other mechanical element such as a slot. A hot-melt processable adhesive composition is to be contrasted with a composition that requires a conventional extruder, and the attendant pressures and temperatures characteristic of an extruder, to liquefy, mix, and/or convey the composition. While a hot-melt tank and pump in a hot-melt processing system can handle adhesive-composition viscosities in a range of up to about 50 Pa.s (50,000 centipoise), an extruder can handle and process adhesive-composition viscosities in a range from about 10 Pa.s (10,000 centipoise) to viscosities of several hundred thousand centipoise.

"Layer" when used in the singular can have the dual meaning of a single element or a plurality of elements.

"Low softening point additive" refers to a tackifier or wax or low molecular weight polymers having a softening point below 80 degrees Celsius, and a viscosity of less than 1 Pa.s (1000 cps) at 182°C (360 degrees Fahrenheit) as measured by a ring and ball method (ASTM E-28).

"Meltblown fiber" refers to fibers formed by extruding a molten thermoplastic material through a plurality of fine, usually circular, die capillaries as molten threads or filaments into converging high velocity gas (e.g., air) streams which attenuate the filaments of molten thermoplastic material to reduce their diameter, which may be to microfiber diameter. Thereafter, the meltblown fibers are carried by the high velocity gas stream and are deposited on a collecting surface to form a web of randomly dispersed meltblown fibers. Such a process is disclosed for example, in U.S. Patent No. 3,849,241 to Butin et al. Meltblown fibers are microfibers which may be continuous or discontinuous, are generally smaller than about 0.67 dtex (0.6 denier), and are generally self bonding when deposited onto a collecting surface.

"Nonwoven" and "nonwoven web" refer to materials and webs of material having a structure of individual fibers or filaments which are interlaid, but not in an identifiable manner as in a knitted fabric. The terms "fiber" and "filament" are used herein interchangeably. Nonwoven fabrics or webs have been formed from many processes such as, for example, meltblowing processes, spunbonding processes, air laying processes, and bonded carded web processes. The basis weight of nonwoven fabrics is usually expressed in ounces of material per square yard (osy) or grams per square meter (gsm) and the fiber diameters are usually expressed in microns. (Note that to convert from osy to gsm, multiply osy by 33.91.)

"Polymers" include, but are not limited to, homopolymers, copolymers, such as for example, block, graft, random and alternating copolymers, terpolymers and blends and modifications thereof. Furthermore, unless otherwise specifically limited, the term "polymer" shall include all possible geometrical configurations of the material. These configurations include, but are not limited to isotactic, syndiotactic and atactic symmetries.

"Softening point" refers to a material softening temperature, typically measured by a ring and ball type method, ASTM E-28.

"Spunbond fiber" refers to small diameter fibers which are formed by extruding molten thermoplastic material as filaments from a plurality of fine capillaries of a spinnerette having a circular or other configuration, with the diameter of the extruded 7 filaments then being rapidly reduced as taught, for example, in U.S. Patent No. 4,340,563 to Appel et al., and U.S. Patent No. 3,692,618 to Dorschner et al., U.S. Patent No. 3,802,817 to Matsuki et al., U.S. Patent Nos. 3,338,992 and 3,341,394 to Kinney, U.S. Patent No. 3,502,763 to Hartmann, U.S. Patent No. 3,502,538 to Petersen, and U.S. Patent No. 3,542,615 to Dobo et al.. Spunbond fibers are quenched and generally not tacky when they are deposited onto a collecting surface. Spunbond fibers are generally continuous and often have average deniers larger than about 0.3 (0.33 dtex), more particularly, between about 0.6 and 10 (0.67 and 11.1 dtex).

"Strand" refers to an article of manufacture whose width is less than a film and is suitable for incorporating into a film, according to the present invention.

"Thermoplastic" describes a material that softens and flows when exposed to heat and which substantially returns to a nonsoftened condition when cooled to room temperature.

"Vertical filament stretch-bonded laminate" or "VF SBL" refers to a stretch-bonded laminate made using a continuous vertical filament process, as described herein.

"Woven" fabric or web means a fabric or web containing a structure of fibers, filaments, or yarns, which are arranged in an orderly, inter-engaged fashion. Woven fabrics typically contain inter-engaged fibers in a "warp" and "fill" direction. The warp direction corresponds to the length of the fabric while the fill direction corresponds to the width of the fabric. Woven fabrics can be made, for example, on a variety of looms including, but not limited to, shuttle looms, rapier looms, projectile looms, air jet looms, and water jet looms.

These terms may be defined with additional language in the remaining portions of the specification.

DESCRIPTION OF PREFERRED EMBODIMENTS

In accordance with the invention, adhesive compositions are provided for use in stretchable .adhesive applications, including laminated structures. A method of making these adhesive compositions and laminates is also provided.

The adhesive compositions and laminates of the invention can be incorporated into any suitable article, such as personal care garments, medical garments, and industrial workwear garments. More particularly, the adhesive composites and 8 laminates are suitable for use in diapers, training pants, swim wear, absorbent underpants, adult incontinence products, feminine hygiene products, protective medical gowns, surgical medical gowns, caps, gloves, drapes, face masks, laboratory coats, and coveralls.

A number of elastomeric components are known for use in the design and manufacture of such articles. For example, disposable absorbent articles are known to contain elasticized leg cuffs, elasticized waist portions, and elasticized fastening tabs. The adhesive compositions and laminates of this invention may be applied to any suitable article to bond these and other elasticized areas.

An adhesive composition of the invention includes crystalline and amorphous polymers and an elastomeric base polymer. For example, the invention encompasses adhesive compositions including selected amounts of polymers having different configurations (*e.g.*, a combination of atactic polypropylene and isotactic polypropylene) in addition to a base polymer. Adhesive compositions of the invention generally perform better, and typically cost less, than conventional hot-melt adhesives. Furthermore, these compositions may typically be processed and applied using conventional hot-melt adhesive processing equipment. Generally new equipment will not be necessary to use adhesive compositions of the invention. It should be understood, however, that the invention encompasses adhesive compositions including selected polymers having different degrees of crystallinity, such as an adhesive composition including atactic and isotactic polypropylene, along with an elastomeric base polymer, whether or not the composition possesses all of the advantages discussed herein.

The performance characteristics of an adhesive composition including a polymer which can assume different configurations (*e.g.*, an atactic, isotactic, and/or syndiotactic configuration, as defined below) can be improved by manipulating the ratio of the configurations present in the adhesive composition (*e.g.*, by increasing the amount of a polymer having an isotactic configuration, which typically has a higher degree of crystallinity compared to the other configurations, relative to the amount of polymer having an atactic configuration, which typically has a lower degree of crystallinity compared to the other configurations). Without being bound to any particular theory, it is believed that a material including a specified combination of atactic and isotactic polymers, such as atactic and isotactic polypropylene, possesses regions, and/or characteristics, of both a crystalline material and an amorphous material. By changing the relative amounts of atactic and isotactic polymer, or for that matter the relative amounts of polymer having differing degrees of crystallinity, one can change the performance characteristics of the resulting adhesive composition. So, for example, a material including a combination of atactic polypropylene and isotactic polypropylene, in further combination with an elastomeric base polymer, possesses desirable adhesive properties and may be used to make laminated structures and disposable absorbent articles.

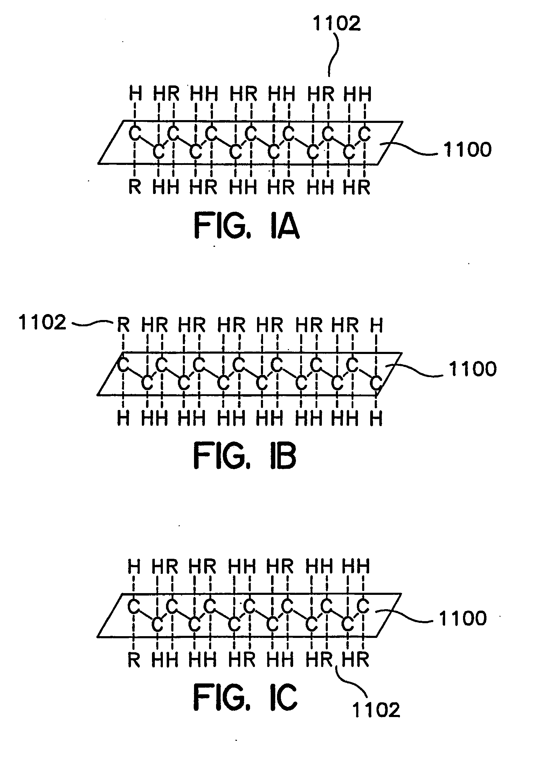

A graphic example provides additional detail on the types of configurations mentioned above. If a polymer chain is depicted in a fully extended, planar, zigzag conformation 1100, the configuration resulting when all the substituent groups R 1102 on the polymer lie above (depicted in Figure 1B) or below (not depicted) the plane of the main chain is called "isotactic". If substituent groups lie alternately above and below the plane the configuration is called "syndiotactic" (depicted in Figure 1A). And a random sequence of substituents lying above and below the plane is described as an "atactic" configuration (depicted in Figure 1C). As discussed above, a polymer, or a region of a polymer, having an isotactic configuration is more likely to assume characteristics of a crystalline structure. For purposes of this invention, the term "isotactic polymer" refers to a polymer that is about 60% isotactic or greater, or about 70% isotactic or greater, or alternatively about 80% isotactic or greater. A polymer, or a region of a polymer, having an atactic configuration is more likely to assume characteristics of an amorphous structure. An atactic polymer may assume some crystallinity, but the degree of crystallinity is typically about 20% or less, or about 15% or less. For purposes of this invention, the term "atactic polymer" refers to a polymer that may not be 100% atactic, but may be about 80% atactic or greater. And a polymer, or a region of a polymer, having a syndiotactic configuration can assume characteristics of a crystalline structure, which is similar to the degree of crystallinity in an isotactic configuration.

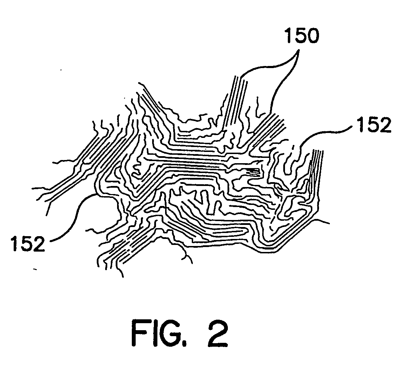

As used herein, "fringed-micelle model" means a theoretical construct characterizing polymeric structures that have both crystalline 150 and amorphous 152 regions (one version of a graphic depiction of a fringed-micellar structure is presented in Figure 2). This model may be used to characterize the structure of an atactic polymer and an isotactic polymer individually, i.e., each polymer possesses both crystalline regions 150 and amorphous regions 152. As explained above, the isotactic polymer likely possesses a greater degree of crystallinity compared to an atactic polymer. Furthermore, this model may be used to characterize the structure of a blend of isotactic polymer and atactic polymer. It should be understood that this model provides one possible view of characteristics of the present invention and in no way limits the scope thereof.

The atactic polymer in the adhesive composition of the invention has a degree of crystallinity of 20% or less, specifically a crystallinity of about 15% or less, and a number-average molecular weight of from 1000 to 300,000, specifically 3000 to 100,000. The isotactic polymer in the adhesive composition of the invention : has a degree of crystallinity of 40% or more, specifically of about 60% or more, particularly of about 80% or more, and a number-average molecular weight of from 3000 to 200,000, more particularly of 10,000 to 100,000. The atactic polymer is present in an amount of 30 to 90 weight percent of the adhesive composition, and the isotactic polymer is present in an amount of 5 to 30 weight percent of the adhesive composition.

The atactic polymer may be the same as the isotactic polymer (*e.g.*, both may be polypropylene, as described below, or both may be polystyrene, polybutene, polyethylene, or combinations of any of these, for example), or the atactic polymer may be different from the isotactic polymer. The term "high density polyethylene" (HDPE) is used to refer to polyethylene that is essentially isotactic, while the term "low density polyethylene" (LDPE) is used to refer to polyethylene that is essentially atactic. HDPE generally has a density in a range of 0.935 to 0.980 grams per cubic centimeter, while LDPE generally has a density in a range of 0.910 to 0.935 grams per cubic centimeter. Examples of suitable atactic polypropylene or ethylene-propylene copolymer (amorphous poly alpha-olefin) are available from Eastman under the trade designations Eastman P1010 and P1023. Examples of suitable isotactic polypropylene are available from Sunoco under the trade designation CP 15000P and from Exxon-Mobil under the trade designation 3746G.

The atactic polymer suitably has a thermosel viscosity between about 500 and about 4000 mPa•s at 190 degrees Celsius as determined using ASTM D 3236. The isotactic polymer has a melt index between 50 and 3000 grams per 10 minutes, as determined using ASTM D 1238, 230°C/2.16 kg Method. The melt index is dependent upon the crystallinity, molecular weight, and molecular weight distribution of the polymers.

The choice of elastomeric base polymer is important. The base polymer is suitably a high melt flow rate thermal elastomer, having a melt flow rate of at least 10 grams per minute. The base polymer comprises styrene present in an amount up to 45%, or between 18% and 30% by weight of the base polymer. The base polymer may achieve the styrene content either by blending different polymers having different styrene co-monomer levels or by including a single base polymer that has the desired styrene co-monomer level. Generally, the higher the styrene co-monomer level is, the higher the tension is.

The base polymer may include polystyrene-polyethylene-polypropylene-polystyrene (SEPS) multi-block copolymer, styrene-isoprene-styrene (SIS) multi-block copolymer, styrene-butadiene-styrene (SBS) multi-block copolymer, styrene-ethylene-butene-styrene (SEBS) multi-block copolymer, as well as combinations of any of these.

One example of a suitable SEPS copolymer is available from Kraton Polymers of Belpre, Ohio, under the trade designation KR.ATON® G 2760. One example of a suitable SIS copolymer is available from Dexco, a division of Exxon-Mobil, under the trade designation VECTOR™. Another example of suitable base polymers is available from DuPont Dow under the trade designation ENGAGE®, particularly the ENGAGE® 8400 series. Suitably, the composition includes the base polymer in an amount between 2% and 15% by weight of the composition.

The base polymer suitably has a Shore A hardness of between 20 and 90, or between 30 and 80. Shore A hardness is a measure of softness, and can be measured according to ASTM D-5.

In one embodiment of the invention, the elastomeric base polymer may have a melt flow rate between 5 and 2000 grams per minute, or between 10 and 2000 grams per minute, or between 20 and 1000 grams per minute, or between 20 and 500 grams per minute, Shore A hardness between 20 and 70, and may be stretched up to 1300%.

In one embodiment, the adhesive composition may also include a high softening point tackifier resin having a softening point of about 80 degrees Celsius or greater, and a viscosity of about 1.5 Pa.s (1500 cps) or greater at 182 degrees Celsius (360 degrees Fahrenheit). Examples of suitable high softening point tackifier resins include hydrocarbons derived from petroleum distillates, rosin, rosin esters, polyterpenes derived from wood, polyterpenes derived from synthetic chemicals, as well as combinations of any of these. A commercially available example of a suitable high softening point tackifier is available from Hercules Inc. of Wilmington, Delaware, under the trade designation PICOLYTE™ S115. PICOLYTE™ S115 has a softening point of 115 degrees Celsius, and viscosity of 10 Pa.s (10,000 cps) at 150 degrees Celsius. Another example of a commercially available high softening point tackifier is ESCOREZ™ 5340 tackifier, available from Exxon-Mobil. ESCOREZ™ 5340 has a softening point of 140 degrees Celsius and viscosity of 5 Pa.s (5000 cps) at 177 degrees Celsius. Another suitable high softening point tackifier, ESCOREZ™ 5320, has a softening point of 122 degrees Celsius, and a relatively low viscosity of 1.5 Pa.s (1500 cps) at 177 degrees Celsius. Yet another suitable high softening point tackifier, ESCOREZ™ 5415, has a softening point of 47.8°C (118 degrees Fahrenheit), and a lower viscosity of 0.9 Pa.s (900 cps) at 177 degrees Celsius. Suitably, the composition may include the high softening point tackifier in an amount between 0% and 20% by weight of the composition.

A low softening point additive may be included in the compositions as well. A low softening point additive typically has a softening point below about 80 degrees Celsius and a viscosity of about 1 Pa.s (1000 cps) or less at 182 degrees Celsius (360 degrees Fahrenheit), while a high softening point tackifier typically has a softening point above about 80 degrees Celsius and a viscosity of about 1.5 Pa.s (1500 cps) or greater at 182 degrees Celsius (360 degrees Fahrenheit). The use of predominantly high softening point tackifiers with high viscosity is important for adhesion improvement due to enhanced cohesive strength. However, the inclusion of relatively low amounts of low softening point additives provides instantaneous surface tackiness and pressure sensitive characteristics as well as reduced melt viscosity. Suitably, the low softening point additive is present in the composition in an amount between 0% and 40% by weight of the composition. One example of a particularly suitable low softening point additive is paraffin wax, having a melting point of about 65 degrees Celsius. Another commercially available example of a suitable low softening point tackifier is available from Hercules Inc. of Wilmington, Delaware, under the trade designation PICOLYTE™ S25. PICOLYTE™ S25 has a softening point of 15-25 degrees Celsius, and a viscosity of 1 Pa.s (1,000 cps) at 80 degrees Celsius. Another suitable low softening point tackifier, also available from Hercules, Inc., is STAYBELITE™ 5, which has a softening point of 79 degrees Celsius. Other suitable low softening point tackifiers are available from Exxon-Mobil under the trade designation ESCOREZ™, namely the 2000 and 5000 series, having a softening point of 80 degrees Celsius or lower.

Additionally, an antioxidant may be included in the composition of the invention, suitably in an amount between 0.1% and 1.0% by weight of the composition. One example of a suitable antioxidant is available from Ciba Specialty Chemicals under the trade designation IRGANOX™ 1010.

A combination of additives may be present in the composition in an amount of up to about 50% by weight of the adhesive composition. These additives may include a tackifier, a plasticizer, mineral oil, color pigment, filler, a polymer compatibilizer and/or the antioxidant or anti-oxidizing agent described above. The adhesive composition may include any one or more of these additives. Examples of suitable tackifiers include the high softening point and low softening point tackifiers described above. Examples of suitable color pigments and fillers include $TiO_2$, carbon black, and calcium carbonate. The adhesive composition may include about 1 to about 10 percent by weight color pigments and fillers. Examples of suitable polymer compatibilizers include polypropylene-b-polyethylene, polypropylene-b-polybutene diblock copolymers. The adhesive composition may include about 2 to about 10 percent by weight polymer compatibilizer. In this embodiment, the adhesive composition suitably has an open time of up to 2 minutes. Alternatively, the adhesive composition can have an open time of about 30 seconds or less, or about 10 seconds or less, or as short as about 1. second or less. The term "open time," as used herein, refers to the length of time during which an adhesive composition remains tacky or sticky prior to drying. Open time is affected by isotacticity/crystallinity of a polymer, such that the greater the level of isotacticity/crystallinity the shorter the open time.

Viscosity of the formulated adhesive compositions is suitably in the range of 1 to 8 Pa.s (1,000 to 8,000 cps) at 149 to 182°C (300 to 360 degrees Fahrenheit). This level of viscosity enables the adhesive compositions to be processed by conventional hot melt equipment. As stated above, however, some adhesive compositions of the invention may not possess this particular advantage.

The formulated adhesive compositions suitably have stretching cabilities of at least the same magnitude as the facing layer(s) to which the adhesive compositions are applied. More particularly, the stretchability of the adhesive compositions is suitably between 100% and 300%, or between 50% and 200%. The adhesive stretchability is evaluated by breakdown of the adhesive, as illustrated in the Examples below.

When applied to one or more substrates, the formulated adhesive compositions suitably have substantial bond strength, and can maintain their bond strength even after stretching. Furthermore, the compositions even maintain their bond strength when tested at body temperature (37 degrees Celsius), thus displaying properties that are particularly desirable for use in products worn in direct or close contact with the human body. The notable bond strength of the formulated adhesive compositions is illustrated in the Examples below.

Unless otherwise noted, "laminated structure" or "laminate" means a structure in which one layer, material, component, web, or substrate is adhesively bonded, at least in part, to another layer, material, component, web, or substrate. A single layer, material, component, web, or substrate may be folded over and adhesively bonded to itself to form a "laminated structure" or "laminate."

In another aspect, the invention encompasses laminated structures employing versions of the adhesive composition as described above. For example, one version of a laminated structure of the present invention includes a first facing layer and a second facing layer, wherein at least a portion of the first facing layer is attached to at least a portion of the second facing layer using an adhesive composition of the invention, and wherein the laminated structure has a static-peel-failure time of at least 2 hours, specifically of 4 hours or more, and particularly of 8 hours or more at body temperature (37.8°C (100 degrees Fahrenheit)). The test method for determining static-peel failure is described in detail below.

In yet another aspect, a laminated structure of the invention includes a first facing layer and a second facing layer, wherein at least a portion of the first facing layer is attached to at least a portion of the second facing layer using an adhesive composition of the invention, and wherein the laminated structure has a relative accretion value of 1 or less, or 0.5 or less, or 0.2 or less (or, alternatively, an accretion value that is substantially zero, or an accretion value that is less than the accretion value of a conventional hot-melt adhesive for which an adhesive composition of the present invention is substituted). The test method for determining relative accretion values is described in detail below. A relative accretion value of about 1 or less means that the adhesive composition of the invention builds up on processing equipment, such as ultrasonic-bonding equipment, at a rate, or in an amount, less than a conventional hot-melt adhesive that is selected as the comparator. In some versions of the invention, a laminated structure employing an adhesive composition having features of the invention, when passed through a unit operation in which the laminated structure is exposed to energy (*e.g.*, ultrasonic energy, infrared energy, thermal energy by conductive or convective transport, produces substantially no build up of the adhesive composition on surfaces of equipment that make up that unit operation (*e.g.*, the surfaces of ultrasonic-bonding equipment used to ultrasonically bond materials).

For any of the laminated structures described above, the first and second facing layers may be part of one-and-the-same substrate. That is, the substrate may be folded over and joined to itself using an adhesive composition of the invention.

Furthermore, the first facing layer, second facing layer, or both may include a variety of materials, including, but not limited to a nonwoven (*e.g.*, a necked-bonded laminate or a spunbond or meltblown material); a film; a woven material; an elasticized component; hook material; a substrate including cellulosic material, thermoplastic material, or both; some combination of these. For example, the facing layers may each include a spunbond web having a basis weight of about 3.4 to about 136 $gm^2$ (0.1 to 4.0 ounces per square yard (osy)), suitably 6.8 to 67.8 $gm^2$ (0.2 to 2.0 osy), or 13.6 $gm^2$ to 20.3 $gm^2$ (0.4 to 0.6 osy). The facing layers may include the same or similar materials or different materials.

Because of the stretchable properties of the adhesive composition, the adhesive composition is particularly suitable for bonding stretchable or elastomeric layers or components to one another. Therefore, stretchable facing layers, such as necked-bonded laminates (NBL), stretch-bonded laminates (SBL), point unbonded materials, and hook material as used in hook-and-loop fasteners, can be successfully bonded using the adhesive composition of the invention. For additional detail on how NBLs and other neck-bonded materials are formed, see U.S. Patent No. 5,336,545 to Morman, entitled "Composite Elastic Necked-Bonded Material,"

An SBL is generally a laminate made up of an elongated elastic web or elongated elastomeric strands bonded between two spunbond layers, for example. For additional detail on how SBLs are formed, see European Patent Application No. EP 0 217 032 published on April 8, 1987 in the names of Taylor et al. Point unbonded materials are fabrics having continuous thermally bonded areas defining a plurality of discrete unbonded areas and are described in greater detail in U.S. Patent No. 5,858,515 issued January 12, 1999 to Stokes, et al. Hook material typically includes a base or backing structure and a plurality of hook members extending outwardly from at least one surface of the backing structure. In contrast to loop material, which is typically a flexible fabric, hook material advantageously includes a resilient material to minimize unintentional disengagement of the hook members as a result of the hook material becoming deformed and catching on clothing or other items. The term "resilient" as used herein refers to an interlocking material having a predetermined shape and the property of the interlocking material to resume the predetermined shape after being engaged and disengaged from a mating, complementary interlocking material. Suitable hook material can be molded or extruded of nylon, polypropylene, or other suitable material. Examples of commercially available hook material are available from Velcro Industries B.V., Amsterdam, Netherlands or affiliates thereof, as well as from Minnesota Mining & Manufacturing Co., St. Paul, Minnesota, U.S.A.

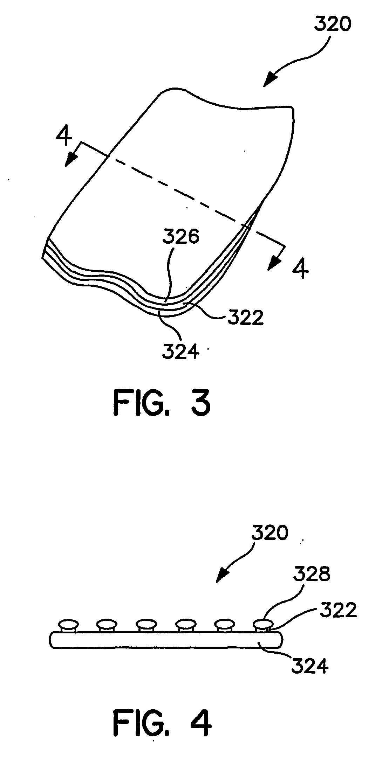

One embodiment of an adhesive composition 322 of the invention applied between two facing sheets, 324 and 326, to form a laminate 320 is shown in Figure 3. In another embodiment of the invention, shown in Figure 4 as a cross-sectional view of Figure 3, elastomeric polymer strands 328 can be adhered to and partially embedded in the adhesive composition 322 to further enhance laminate tension control. It will be appreciated that the strands 328 may be laid out periodically, non-periodically, and in various spacings, groupings, sizes, and compositions of elastic material according to the effect desired from the adhesive composition 322 and the use to which it is put.

The elastomeric polymer strands 328 may be prepared from any suitable elastomeric polymer, or may contain blends of elastic and inelastic polymers, or of two or more elastic polymers, provided that the blend exhibits elastic properties. The strands 328 are substantially continuous in length. The strands 328 may have a circular cross-section, but may alternatively have other cross-sectional geometries such as elliptical, rectangular, triangular or multi-lobal.

In yet another aspect, a garment may be formed that employs an adhesive composition of the invention and/or a laminated structure of the present invention. So, for example, one version of a garment of the invention includes a liquid-permeable topsheet; a liquid-impermeable backsheet; and a laminated structure having features of the invention, such as one or more of the versions described above. Some or all of the backsheet may include the laminated structure; some or all of the topsheet may include the laminated structure; the laminated structure may be attached, directly or indirectly, to the backsheet, the topsheet, or both; or a laminated structure or structures may be present in some combination of these.

As another example, the adhesive compositions can be used to attach stretchable or elastomeric ear or flap attachments to a stretchable or elastomeric backsheet of a diaper or training pant. The adhesive compositions of this invention maintain greater bond strength, even after stretching and at body temperature, compared to current commercial adhesive compositions, as demonstrated in the examples below.

In addition to various versions of adhesive compositions, laminated structures, and garments of the invention, the invention also encompasses methods of making these compositions, structures, and articles of manufacture.

In the process description that follows, the preparation, processing, and application of an adhesive composition including an atactic polymer, an isotactic polymer, and an elastomeric base polymer is described. It should be understood, however, that this description is given as an example. Other processing methods and equipment may be used to prepare and deliver various adhesive compositions of the invention.

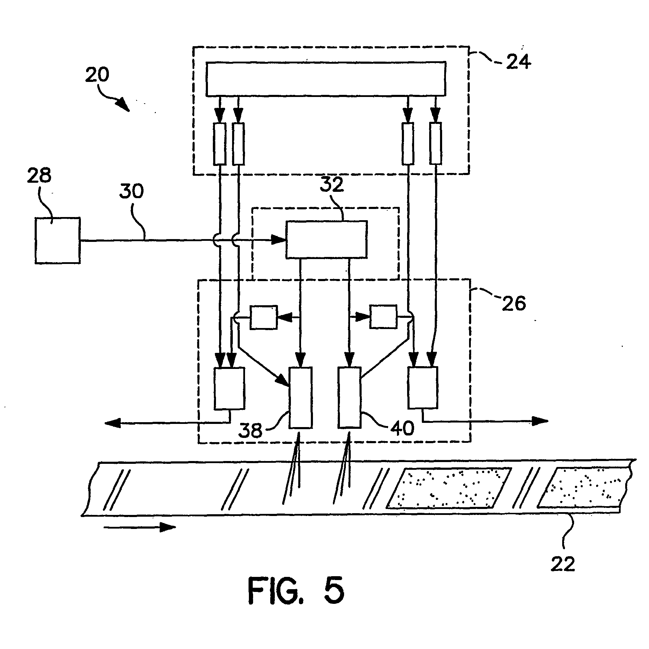

Figure 5 shows a schematic diagram of an apparatus 20, and a method for spraying an adhesive composition, on a moving web 22. The apparatus 20 may include a programmable control system 24 that is operatively connected to a flow-control system 26. The combination of the programmable control system 24 and the flow-control system 26 are configured to control the delivery of an adhesive composition in liquid form to the moving web 22. Generally an adhesive composition is received in solid form at a manufacturing site where equipment such as that depicted in Figure 5 is located. For example, hot-melt adhesive compositions may be received as solid pellets, blocks, or some other shape. The solid is then heated so that the hot-melt adhesive composition is in a form such that it can be conveyed, and applied, to a substrate or other material. Usually this requires that the heated hot-melt adhesive be in substantially liquid form. For the present invention, an adhesive composition including an atactic polymer, an isotactic polymer, and an elastomeric base polymer (*e.g.*, atactic polypropylene, isotactic polypropylene, and SEPS elastomer), in solid form, might be received at a manufacturing site for heating and processing as described above. Alternatively, the atactic polymer, isotactic polymer, and elastomeric base polymer might be received as separate components to be blended at the manufacturing site. An example of equipment and methods for heating an adhesive composition, or precursor materials to the adhesive composition, are described in more detail below.

One version of a method of making a laminated structure having features of the invention includes the steps of providing a first facing layer or substrate; providing a second facing layer or substrate; providing an atactic polymer having a degree of crystallinity of 20% or less, alternatively a crystallinity of about 15% or less, and a number-average molecular weight of from 1000 to 300,000, alternatively about 3000 to about 100,000; providing an isotactic polymer having a degree of crystallinity of 40% or more, alternatively of about 60% or more, alternatively of about 80% or more, and a number-average molecular weight of from 3000 to 200,000, alternatively of 10,000 to 100,000, and a melt index between 50 and 3000 grams per 10 minutes, as determined by ASTM D 1238, 230°C/2.16 kg method; providing an elastomeric base polymer comprising sytrene present in an amount up to 45% by weight; heating the atactic polymer, the isotactic polymer, and the elastomeric base polymer so that they are sufficiently liquefied for blending; blending the heated atactic polymer, the heated isotactic polymer, and the heated elastomeric base polymer to form an adhesive composition that is melt-processable at a temperature of 1 about 232 degrees Celsius (450 degrees Fahrenheit) or less, specifically of about 204 degrees Celsius (400 degrees Fahrenheit) or less, alternatively of about 191 degrees Celsius (375 degrees Fahrenheit) or less, and alternatively of about 177 degrees Celsius (350 degrees Fahrenheit) or less; applying the adhesive composition to the first substrate, the second substrate, or both substrates; and joining at least a portion of the first substrate to at least a portion of the second substrate so that some or all of the applied adhesive composition is positioned between the first substrate and second substrate.

It should be understood that the atactic, isotactic, and elastomeric polymers, plus any additives such as a tackifier, could be heated and blended at a site other than the site where the laminate is being formed. For example, the atactic, isotactic, and elastomeric polymers could be blended using an extruder or hot-melt processing equipment at a first geographic location. The blend could then be allowed to cool and processed to make a solid form (*e.g.*, pellets). The polymer blend, in solid form, could then be shipped from the first geographic site to a site where a laminate is to be made. The blend, in solid form, would simply be heated to substantially liquefy the adhesive composition prior to its being used to make a laminate.

It should also be understood that a method having features of the invention encompasses different sequences of steps by which the adhesive composition is made. For example, the atactic polymer could be heated in a first container; the isotactic polymer could be heated in a second container; the elastomeric base polymer could be heated in a third container; the containers may be heated concurrently or in any order; and then the three substantially liquefied polymers, along with any additives such as a tackifier, could be blended in the first container, the second container, the third container, or a fourth container. Alternatively, one of the polymers (i.e., the atactic, isotactic, or elastomeric polymer) could be heated in a container, and after the selected polymer was substantially liquefied, the remaining polymers could be added to the same container to be heated and blended. As another alternative, the atactic, isotactic, and elastomeric polymers could be added to the same container to be heated and blended at the same time.

The preceding discussion assumes that the atactic polymer, the isotactic polymer, and the elastomeric base polymer are in substantially solid form at room temperature, or temperatures that are typically present in a working environment suitable for human beings. To the extent that any of these polymers are available in substantially liquid form, then those steps providing for heating and liquefying that material (i.e., the already-liquefied material) can be omitted from methods of the invention.

As representatively illustrated in Figure 5, the continuously moving web 22 may be supplied by any means known to those skilled in the art, such as known conveyor systems. The continuously moving web 22 can include any type of layer or web of material, such as: films; nonwoven webs; woven webs which may include strands of thermoplastic material; an elasticized component; natural material such as threads of cotton laminate materials; or combinations thereof. More particularly, the continuously moving web 22 may include a necked-bonded laminate ("NBL"), which generally comprises a polyethylene layer sandwiched between two polypropylene, spunbonded layers; a polypropylene, spunbonded layer ("SB"); or an outercover comprising a polyethylene layer and a polypropylene, spunbonded layer. As is described below in more specific terms, the adhesive is sprayed on the continuously moving web 22 in a specific design or pattern for subsequent placement of or bonding to another material. The other material can be the same or different than the web to which adhesive was applied. In some cases adhesive might be applied to both substrates before they are joined together. And, as mentioned above, one substrate might be folded over and attached to itself to form a laminated structure.

The programmable control system 24 of the present invention is configured to send signals to the flow-control system 26 which, in response thereto, is configured to initiate a spray of adhesive at the correct time to provide the desired pattern of adhesive on the moving web 22. As representatively illustrated in Figure 5, the flow-control system 26 includes an adhesive source 28 which is configured to deliver an adhesive through an adhesive supply line 30 to a metering mechanism 32. The adhesive can be delivered to the metering mechanism 32 by any means known to those skilled in the art, such as by the use of a pump.

The metering mechanism 32 is configured to continuously supply at least one independent, volumetric flow of adhesive to a respective nozzle. As used herein, the term "volumetric flow" refers to a flow of adhesive that has a predetermined volumetric flow rate. Such a "volumetric flow" may be provided by a positive-displacement metering pump which is configured to supply a specific volumetric flow which is independent of the manner in which the adhesive is supplied to the metering mechanism 32. As a result, for an adhesive that is at a given density, the metering mechanism 32 is configured to provide an independent, predetermined mass flow rate of adhesive to each nozzle. Other adhesive processing and delivery systems utilize pressure to provide a flow of adhesive.

The metering mechanism 32 of the invention may be configured to supply a single, volumetric flow of adhesive to one nozzle or an independent, volumetric flow of adhesive to each of a plurality of nozzles depending upon the number of nozzles required to provide the desired pattern of adhesive on the moving web 22. A suitable device to provide the metering mechanism 32 may include a positive-displacement metering pump which is commercially available from May Coating Technologies, Acumeter Division, a business having offices located in Holliston, Mass., under the trade designation No. 19539. The metering mechanism 32 may include any other piston pump or gear pump which are well known to those skilled in the art.

The metering mechanism 32 may be configured to supply any desired volumetric flow rate of adhesive to each nozzle. For example, the metering mechanism 32 may be configured to provide a pre-determined volumetric flow rate of from 1 to 1000 cubic centimeters per minute and alternatively from 30 to 180 cubic centimeters of adhesive per minute to each nozzle. The metering mechanism 32 may be configured to provide either a constant or a variable volumetric flow rate of adhesive to each nozzle. For example, if the metering mechanism 32 is a positive-displacement metering pump, the speed of the pump may be controlled to vary the volumetric flow rate of adhesive to the nozzles.

Each nozzle 38 and 40 as representatively illustrated in Figure 5 can be any device which is capable of providing the desired pattern of adhesive on the moving web 22. For example, one suitable nozzle is commercially available from Nordson Corporation, a business having offices located in Duluth, Ga., under the trade designation Model No. 144906. Another suitable nozzle for use in the present invention is obtainable from ITW Dynatec Co. of Hendersonville, Tenn., under the trade designation number 057B1639, 1.D. #A3. Such nozzles are typically configured to be operated between an on position and an off position to control the spray of adhesive from the nozzles. When operated in the on position, each nozzle may be configured to spray substantially the entire volumetric flow of adhesive which is independently supplied to it to more accurately control the amount and pattern of the adhesive on the moving web 22. The nozzles 38 and 40 may further be configured to include air streams that can be directed to provide a desired pattern in the spray of adhesive being dispensed from each nozzle. Such air streams can provide a desired adhesive spray pattern, such as a pattern of swirls of adhesive.

After the pattern of adhesive has been sprayed on the moving web 22, the web may be further processed in a variety of ways. For example, the continuously moving web 22 may be contacted by a second substrate web, such as a nonwoven layer, between a pair of nip rolls to adhesively join the two substrate webs together. Thereafter, this composite material or laminate may be used in a variety of ways such as in the construction of disposable absorbent articles such as diapers, incontinent articles, training pants, feminine care articles.

The above discussion provides one example of hot-melt processing equipment and a system for applying adhesive to a substrate. It should be understood that this is but one example, and that the invention encompasses other systems for preparing and applying adhesives *(see, e.g.,* U.S. Patent No. 4,949,668, entitled "Apparatus for Sprayed Adhesive Diaper Construction," which issued on 21 August 1990.

Regardless of the system used to apply the adhesive, the resulting composite material or laminate may be exposed to thermal, infrared, ultrasonic, or other forms of energy in subsequent unit operations or processing steps.

It should be understood that this invention is applicable to other structures, composites, or products incorporating adhesive compositions of the invention.

Test Methods

_Elongation_

The elongation of an elastic composite laminate according to the present invention is suitably determined as follows. A 2.5 cm (1-inch) wide by 10 cm (4-inch) long sample of the laminate, is provide. The central 7.62 cm (3-inch) area of the sample is marked. The test sample is then stretched to its maximum length, and the distance between the marks is measured and recorded as the "stretched to stop length." The percent elongation is determined according to the following formula:

$$\{(\text{stretched to stop length (in inches)}) - 3\}/3 \times 100$$

If a 2.5 cm by 10 cm (1-inch by 4-inch) area is not available, the largest sample possible (but less than 2.5 cm by 10 cm (1-inch by 4-inches)) is used for testing with the method being adjusted accordingly.

_Tension Force_

The tension force of an elastic composite laminate according to the present invention is determined on a test sample of the laminate having a width of 2.54 cm (1 inch) and a length of 7.62 cm (3 inches). A test apparatus having a fixed clamp and an adjustable clamp is provided. The adjustable clamp is equipped with a strain gauge commercially available from S. A. Mieier Co. under the trade designation Chatillon DFIS2 digital force gauge. The test apparatus can elongate the test sample to a given length. One longitudinal end of the test sample is clamped in the fixed clamp of the test apparatus with the opposite longitudinal end being clamped in the adjustable clamp fitted with the strain gauge. The test sample is elongated to 100 percent of its elongation (as determined by the test method set forth above). The tension force is read from the digital force gauge after 1 minute. At least three samples of the elasticized area are tested in this manner with the results being averaged and reported as grams force per inch width.

*180° Static Peel Test*

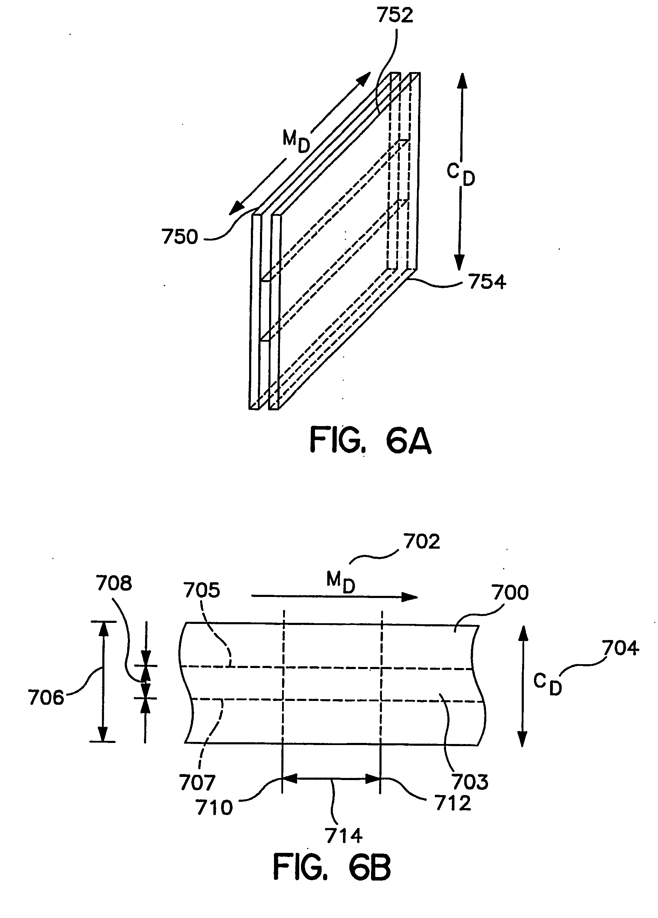

The static peel test was used to determine the approximate time to failure of a laminate in which one substrate was adhesively bonded to another substrate. All laminates were made as described above on a J & M machine. Samples were cut from the prepared laminate which was in the form of a continuous web prepared on a J & M machine, as shown in Figure 6A. More particularly, Figure 6A depicts a top view of a portion of a laminate 700 after it has been formed. Figure 6B depicts a sectional view of a sample that has been removed from the laminate depicted in Figure 6A. A continuous band of adhesive 703, whether it was applied using meltblowing, cycloidal, slot, or other application technique, is denoted by broken lines 705 and 707. The adhesive is under the upper substrate of the laminate depicted in the Figure. As the laminate is made in a continuous manner, it is wound up in the form of a roll. The direction that is perpendicular to the machine direction 702, but lying within the plane of the laminate, is denoted as the cross-machine direction 704. Typically the width of the formed laminate, width denoting the dimension parallel to the cross-machine direction, was about 10 cm (4 inches) 706. The width of the applied adhesive, again width denoting a dimension parallel to the cross-machine direction, typically was from about 1.27 cm (0.5 inches) to about 2.54 cm (1 inch) 708. Also, the band of adhesive was generally applied such that it was substantially centered in the laminate (in the width dimension). Unless otherwise noted, the width of the applied adhesive was about 1.27 cm (0.5 inches). (Note: the lines 710 and 712 denote the manner in which a 5.1 cm (2-inch) 714 sample was cut for subsequent analysis).

The test procedure was conducted as follows:

1. A 5.1 cm (2-inch) test panel was cut from the laminate, as shown in Figures 6A and 6B.
2. The test laminate was then suspended vertically in a forced-air oven, model number OV-490A-2 manufactured by Blue M Co., a business having offices in Blue Island, Illinois, that had been pre-heated to a temperature of 37.8°C (100 degrees Fahrenheit), with the top of one substrate layer 750 secured by a clamp or other mechanical securing element, the clamp or securing element having a width of about 5.1 cm (2 inches).
3. A 500-gram weight was then affixed to the top edge 752 of the other substrate using a clamp or other mechanical securing element. Again, the clamp or securing element used to attach the 500-gram weight was about 5.1 cm (2 inches).
4. Approximately every ½ hour, the test laminate was visually examined by quickly opening the oven door. The time at which one substrate or layer had detached from the other substrate or layer was recorded. The recorded time corresponded to the approximate time of failure of the laminate.

The two, now separate, substrates were then examined to determine the nature of the failure. If the substrates separated such that most of the adhesive remained on one of the substrates, then failure was deemed to be an adhesion failure (*i.e.*, failure likely occurred at the interface between one of the substrates and the adhesive composition). If the substrates separated such that adhesive remained on both substrates, the failure was deemed to be a cohesion failure (*i.e.*, separation likely occurred within the adhesive composition itself). If neither of these conditions arose, but instead one or both of the substrates failed (i. e. that portion of the laminate bonded by the adhesive, usually a 2.54 cm (1 inch) by 5.1 cm (2 inch) area of the test panel), then the failure was deemed a material failure of one or both substrates.

*Dynamic Peel Testing*

To determine dynamic peel strength, a laminate was tested for the maximum amount of tensile force that was needed to pull apart the layers of the laminate. Values for peel strength were obtained using a specified width of laminate (for the present application, 5.1 cm, (2 inches); clamp jaw width (for the present application, a width greater than 5.1 cm (2 inches)); and a constant rate of extension (for the present application, a rate of extension of 300 millimeters per minute). For samples having a film side, the film side of the specimen is covered with masking tape, or some other suitable material, in order to prevent the film from ripping apart during the test. The masking tape is on only one side of the laminate and so does not contribute to the peel strength of the sample. This test uses two clamps, each clamp having two jaws with each jaw having a facing in contact with the sample, to hold the material in the same plane, usually vertically. The sample size is 10.2 cm (2 inches) wide by 20.4 cm (4 inches). The jaw facing size is 1.25 cm (0.5 inch) high by at least 10.2 cm (2 inches) wide, and the constant rate of extension is 300 mm/min. For a dynamic hold the material in the same plane, usually vertically. The sample size is 2 inches (10.2 cm) wide by 4 inches (20.4 cm). The jaw facing size is 0.5 inch (1.25 cm) high by at least 2 inches (10.2 cm) wide, and the constant rate of extension is 300 mm/min. For a dynamic peel test, one clamp is attached to the top 750 of one substrate of a test panel (*see* Figure 6A). The other clamp is attached to the top 752 of the other substrate of a test panel. During testing, the clamps move apart at the specified rate of extension to pull apart the laminate. The sample specimen is pulled apart at 180 degrees angle of separation between the two layers, and the peel strength reported is the maximum tensile strength, in grams, recorded during the test. Each of the peel strengths reported below is an average of five to nine tests. A suitable device for determining the peel strength testing is a SINTECH 2 tester, available from the Sintech Corporation, a business having offices at 1001 Sheldon Dr., Cary, N.C. 27513; or an INSTRON Model TM, available from the Instron Corporation, a business having offices at 2500 Washington St., Canton, Mass. 02021; or the Thwing-Albert Model INTELLECTII available from the Thwing-Albert Instrument Co., a business having offices at 10960 Dutton Rd., Philadelphia, Pa. 19154.

*Accretion Value or Relative Accretion Value*

The relative accretion or build-up of an adhesive, alone or in combination with other materials, e.g., fibers, was measured by running a laminate comprising adhesive through a rotary ultrasonic bonder at 91.4 m (300 feet) per minute for ten minutes (or other specified time). The rotary bonder included a horn and a dot-pattern anvil design. The ultrasonic generator was a 3005 Autotrac, 20 KHz, 3000 watt generator from Dukane Corporation, a business having offices in Saint Charles, Illinois. A variable-power supply was used to vary power available to the generator. The power level used was 100%, which corresponded to an ultrasonic wave amplitude of 71 to 89 $\mu$m (2.8 to 3.5 mil (1 mil is equivalent to 1/1000 inch)). The horn diameter was approximately 17.1 cm (6.75 inches), with the pressure exerted by the horn on the anvil typically about 276 kPa (40 pounds per square inch) or more to ensure good contact between the substrate, web, or laminate being processed; the horn; and the anvil.

The anvil had a dot pattern, with each pin having a 1.1 mm (45 mil) diameter and a height of 790 $\mu$m (31 mil). The spacing between each pin was about 2 mm (79 mil). The anvil pins were made from D2 tool steel, which was heat treated and though hardened to Rockell C 60-63. The width of the pattern was 7.6 mm (300 mil). The diameter of the anvil was about 14.5 cm (5.7 inches).

Additional detail on related designs and specifications pertaining to ultrasonic equipment is found in U.S. Patent Nos. 5,110,403 and 5,096,432.

The build-up, which consisted of adhesive and other material, *e.g.*, nonwoven fibers, was scraped from the horn and the anvil and weighed, giving the accretion value for the evaluated adhesive.

Laminates for this evaluation were prepared by meltblowing adhesive to get a 10 gram per square meter coverage on an approximately 13.6 gm$^2$ (0.4-ounce-per-square-yard) polypropylene spunbond nonwoven facing. As shown above, adhesive was applied to one facing. This facing with the applied adhesive was then nipped together with the other facing (or substrate, in this case another 13.6 gm$^2$ (0.4 oxy) polypropylene spunbond substrate) to form a laminate. Typical lamination speeds were 91.4 m (300 feet) per minute.

Conventional hot-melt adhesives that were used to prepare laminates prior to accretion-value tests included: an adhesive available under the designator H2800 from Bostik-Findley, a business having offices in Milwaukee, Wisconsin; an adhesive available under the designator H2525A from Bostik-Findley; and an adhesive available under the designator N.S.10242-94A from National Starch Co., a business having offices in Bridgewater, New Jersey.

A laminate made using a conventional hot-melt adhesive, or an adhesive of the present invention, was run through ultrasonic-bonding equipment under the conditions described above. The accretion or buildup was scraped off the various ultrasonic-bonding surfaces after a selected time and weighed. Relative-accretion values may be calculated by dividing the accretion value of the laminate comprising an adhesive of the present invention by the accretion value of a selected conventional hot-melt adhesive (*e.g.*, a conventional hot-melt adhesive for which an adhesive of the present invention is to be substituted).

*Thermal Stability: Thermogravimetric Analysis and Differential Scanning Calorimetry*

The thermal stability of versions of adhesive compositions of the present invention was determined using thermogravimetric analysis and differential scanning calorimetry. For the thermogravimetric analysis, a sample of adhesive was placed in a sample holder in the heating element of a Model 951 Thermogravimetric Analyzer made by TA Instruments, a business having offices in New Castle, Delaware. The sample was heated from room temperature, which was approximately 21°C, to a temperature of 450°C at a heating rate of 10°C per minute. The sample was heated under a dynamic atmosphere of air with a flow of approximately 80 milliliters per minute. The crucible was continuously weighed during heating so that any decrease in weight could be detected. The resulting weight-change curves for the tested adhesives, *i.e.* plots of sample weight versus temperature, showed that isotactic polypropylene, atactic polypropylene, and blends of atactic and isotactic polypropylene (with the blends typically ranging from about 10 weight percent to about 30 weight percent isotactic polypropylene) generally had a decomposition temperature of about 235°C in air.

For the analysis using differential-scanning calorimetry, a 10 milligram sample of isotactic polypropylene *(see* Example 1 below) was placed in the sample chamber of the heating/cooling block of a Model 2920 differential scanning calorimetry analyzer made by TA Instruments. The sample was heated from -100°C to 250°C, then cooled to -100°C, then reheated again to 250°C, at a heating and cooling rate of 10°C per minute. A Liquid Nitrogen Cooling Accessory, also made by TA Instruments, was attached to the Model 2920 differential scanning calorimeter. The results indicated that there was a significant peak showing energy absorption over the temperature range from about 150°C to about 170°C, with a peak at about 161°C *(i.e.,* indicative of melting).

A 10-milligram sample of amorphous polypropylene *(see* Example 1 below) was evaluated using the same differential-scanning calorimetry procedure. The analysis indicated that the amorphous polypropylene had a glass-transition temperature of about -10 degrees Celsius.

*Viscosity*

Atactic and isotactic polypropylene blends of varying compositions were formulated into 10.0 g samples. These samples were heated to or above 204°C (400°F) in a Brookfield Digital Rheometer Model DV-III using a Brookfield Temperature Controller (available form Brookfield Engineering Laboratories, a business having offices in Stoughton, MA). Spindle #27 was used for all trials and the instrument was appropriately zeroed and calibrated before each test. After the sample had been stabilized and sufficiently mixed at 204°C (400 degrees Fahrenheit) (or above), readings of the spindle rpm torque, and viscosity were recorded. The temperature was then lowered, typically in 5.6 °C (10°F) increments, and the sample allowed to stabilize for 10-15 minutes before subsequent readings of spindle rpm, torque, and viscosity were taken. For various blends of isotactic polypropylene and atactic polypropylene *(see* Example 1 below for characteristics), Brookfield viscosities at 182°C (360 degrees Fahrenheit) were: for 10 weight percent isotactic polypropylene/90 weight percent atactic polypropylene, the viscosity was 3.2 Pa.s (3200 centipoise); for 20 weight percent isotactic polypropylene/80 weight percent atactic polypropylene, the viscosity was 4.7 Pa.s (4700 centipoise); for 30 weight percent isotactic polypropylene/70 weight percent atactic polypropylene, the viscosity was 6.3 Pa.s (6300 centipoise); and for 40 weight percent isotactic polypropylene/60 weight percent atactic polypropylene, the viscosity was 7000 centipoise.

*Molecular Weighs (Number Average and Weight Average)*

Atactic polypropylene, isotactic polypropylene, and blends of atactic and isotactic polypropylene were sent to American Polymer Standard Corp., a business having offices in Philadelphia, PA, for molecular-weight determinations. The number-average and/or weight-average molecular weights were determined by American Polymer using gel-permeation chromatography on a Waters Model No. 150 gel-permeation chromatograph. The determinations were made using: four, linear, Shodex GPC gel columns; poly(styrene-divinyl benzene) copolymers as standards; trichlorobenzene as the solvent, introduced to the chromatograph at a volumetric flow rate of 1.0 milliliter per minute; an operating temperature of 135 degrees Celsius; a sample-injection volume of 100 microliters;'an M-150C-(64/25) detector; and a GPC PRO 3.13 IBM AT data module.

*Creeping Resistance of Elastic Strands*

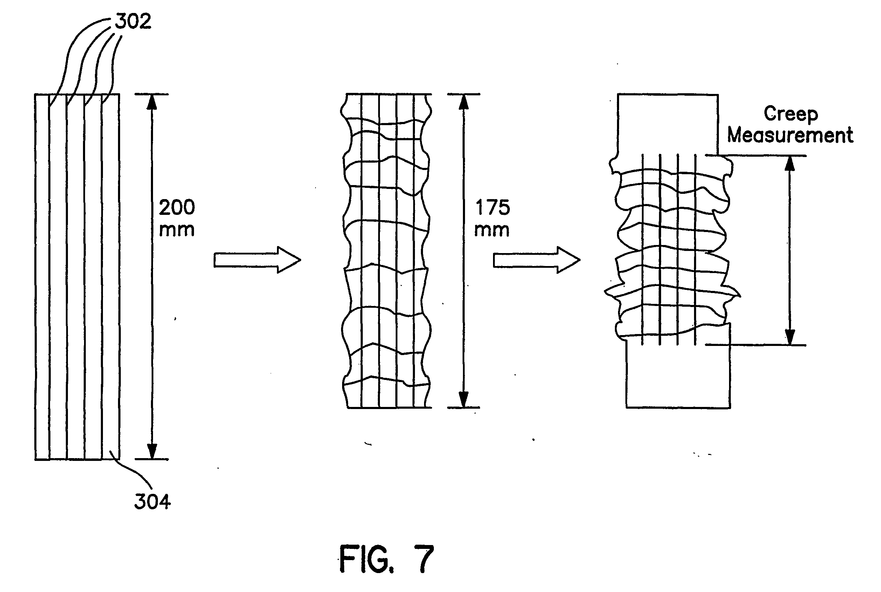

Twelve elastic strands 302, approximately 2.5 mm apart in the cross-direction and each elongated approximately 300%, were adhesively attached and sandwiched between two 10 cm (4-inch) wide continuous polypropylene spunbonded layers 304 to form a laminate. The laminate was fully extended by hanging a weight (about 500 grams or higher) at one end of the laminate, and a 200 mm machine-direction length was then marked. The laminate was then released, such that the 200 mm length snapped back to 175 mm, whereupon the 175 mm length was marked. The laminate was then stapled to a piece of cardboard at the 175 mm length. The marked length of the laminate was then cut to release tension in the elastic strands 302, and the snapback length of the strands was measured. An illustration of the creeping test procedure is shown in Figure 7.

Initial creep percentage was calculated by first determining the difference between the 175 mm length and the snapback length, then dividing the difference by the 175 mm length and multiplying the quotient by 100, as shown in the following equation:

$$\text{Initial Creep \%} = (175_{mm} - X_{initial\ creep})/175 \times 100$$

The sample was then placed in an oven at 37.8°C (100 degrees Fahrenheit) for 90 minutes to measure aging creep. Aging creep percentage was then calculated by determining the difference between the 175 mm length and that snapback length, then dividing the difference by the 175 mm length and multiplying the quotient by 100, as shown in the following equation:

$$\text{Aging Creep \%} = (175_{mm} - Y_{aged\ creep})/175 \times 100$$

$X_{initial}$ creep and $Y_{aged}$ creep readings were taken from the averaged measurements of the 24 strands during the tests.

EXAMPLES

Example 1

This example demonstrates the high stretchability and bond strength of an adhesive composition of the invention compared to commercially available adhesive compositions.

An adhesive composition ("Polypropylene Blend") was formed from 90 wt% Eastman P1023 atactic polypropylene and 10 wt% Sunoco CP 15000P isotactic polypropylene. This composition was bonded to two facing layers to form a laminate. Each of the facing layers was a necked-bonded laminate (NBL) including 2 layers of spunbond and a layer of elastomeric film. The adhesive composition was applied to the facing layers at an add-on of 30 gsm.

Similar laminates were formed using H2525A hot-melt adhesive, available from Bostik-Findley, a business having offices in Milwaukee, Wisconsin; and an amorphous poly-alpha-olefin (APAO) hot-melt adhesive, comprising a poly(ethylene-copropylene) copolymer, which is available under the designator RT2730 from Huntsman Polymer Corp., Houston, Texas; both with the same type of facing layers as in the polypropylene sample, and an add-on of 30 gsm.

Another adhesive composition ("Composition 1") was formed from 45 wt% Eastman P1023 atactic polypropylene, 7 wt% Sunoco CP 15000P isotactic polypropylene, 13 wt % SEPTON SEPS elastomer, 15 wt% H-100R hydrocarbon tackifier, and 20 wt% ESCOREZ 5690 hydrocarbon tackifier. A laminate was formed using this formulated adhesive with the same type of facing layers and add-on level as the polypropylene sample.

Each of these laminates was tested for stretchability of the bonding joint using SINTECH, as described in the test methods. The bonding strengths of the laminates were obtained using the dynamic and static peel test described in the test methods, with static peel determined at body temperature (37.8°C (100 degrees Fahrenheit)).

The bonding strength static peel determined at body temperature (100 degrees Fahrenheit). The bonding strength of each laminate was tested again after stretching the laminate by 85% in order to determine the stretching effect on the bonding strength of the laminate. Results are shown in Table 1.

Table 1: Dynamic and Static Peel Strengths

| Adhesive Composition | Dynamic Peel Strength (grams 5.1 cm (2 inches) width) | 180° Static Peel Strength (time to fail) |
|---|---|---|
| Polypropylene Blend (comparative) | 1350 | ~3 hours |
| H2525A (comparative) | 1170 | ~30 minutes |
| APAO RT2730 (comparative | 790 | ~5 minutes |
| Composition 1 (invention) | 2300 | 8 hours |

It was found that the stretchability of the bonding joint of the polypropylene adhesive composition was comparable to the stretchability of the H2525A adhesive, but the polypropylene adhesive composition bonding joint was stronger than the bonding joint of H2525A, evidenced by the dynamic and static peel strengths. The bonding strength was not affected after stretching for either the polypropylene adhesive composition or for H2525A.

In comparison to APAO RT2730, the bonding joint of APAO RT2730 appeared to be stretchable, but the bond strength was much weaker than the polypropylene adhesive composition. The bond strength of APAO RT2730 was even worse after being stretched to 80% elongation, after which the bond strength lost more than 50% resulting in dynamic peel strength of about 300 grams 5.1 cm (2 inches) width.

The formulated adhesive composition ("Composition 1") appeared colorless or water white, displayed some degree of pressure sensitivity, and appeared to be even more stretchable than the other samples by displaying elongation of 200%. This formulated adhesive composition also showed excellent thermal stability in the hot melt adhesive application temperature range (149-196°C (300-385 degrees Fahrenheit).

The hot melt viscosity, measured in accordance with the test method described above, was from 1 to 8 Pa.s (1,000 to 8,000 cps) in the temperature range of 149-182°C (300 to 360 degrees Fahrenheit), which is suitable for conventional hot melt equipment application. The Composition 1 laminate sample indicated no loss of bond strength after maximum stretching.

Example 2

This example demonstrates the high bond strength of an adhesive composition of the invention compared to a commercially available adhesive composition in a simulated ear attachment configuration such as in a training pant or diaper.

An adhesive composition ("Composition 2") was formed from 45 wt% Eastman P1023 atactic polypropylene, 22 wt% H-100R hydrocarbon tackifier, 15 wt% ESCOREZ 5690 hydrocarbon tackifiers, 13 wt% Exxon PP 3746G isotactic polypropylene, 5 wt% SEPTON 002 elastomer, and 0.5 wt% Sigma 1010 antioxidant. This composition had a viscosity at 171°C (340 degrees Fahrenheit) of 3.9 Pa.s (3900 cps), and a viscosity at 182°C (360 degrees Fahrenheit) of 2.7 Pa.s (2700 cps).

This composition was bonded to two facing layers to form a laminate. One of the facing layers was a necked-bonded laminate (NBL) including 2 layers of spunbond and a layer of elastomeric film. The other facing layer was a hook material, namely Velcro HTH-85 having a unidirectional hook pattern and having a thickness of about 0.9 millimeters, available from Velcro Industries B.V. Two different samples were formed using Composition 2, with one sample including the adhesive composition at an add-on of 15 gsm and the other sample including the adhesive composition at an add-on of 30 gsm.

A third laminate was formed using the same facing materials as in the other samples, but with H2525A hot-melt adhesive, available from Bostik-Findley, a business having offices in Milwaukee, Wisconsin, at an add-on of 30 gsm.

Each of these laminates was tested for bonding strength using SINTECH, as described in the test methods. The bonding strengths of the laminates were obtained using the static peel test described in the test methods, with static peel determined at body temperature (100 degrees Fahrenheit). Results are shown in Table 2.

Table 2: Static Peel Strengths

| Adhesive Composition | Add-on (gsm) | 180° Static Peel Strength, (time to fail) |
| --- | --- | --- |
| Composition 2 (invention) | 15 | 6-8 hours |
| Composition 2 (invention) | 30 | 20 hours |
| H2525A (comparative) | 30 | 2-4 hours |

The formulated adhesive composition ("Composition 2") exhibited far superior static peel strength compared to the commercial adhesive, even when using only half the amount of adhesive compared to the commercial adhesive sample.

Example 3

This example demonstrates the creep resistance of an adhesive composition of the invention when used to bonded elastomeric strands.

An adhesive composition ("Composition 3") was formed from 40 wt% Eastman P1023 atactic polypropylene, 40 wt% ESCOREZ 5690 hydrocarbon tackifier, 15 wt% Exxon PP 3746G isotactic polypropylene, and 5 wt% Exxon VECTOR 584 SIS copolymer. This composition had a viscosity at 174°C (345 degrees Fahrenheit) of 2.8 Pa.s (2800 cps).

In one sample, this composition was used to bond 940 denier LYCRA spandex strands, available from E.I. du Pont de Nemours, to 20.3 $gm^2$ (0.6 osy) spunbond material. The composition was applied at an add-on level of 7.5 gsm. Initial creeping was 10-20%. After aging at 37.8°C (100 degrees Fahrenheit) for 90 minutes, the creeping was 20-30%.

In another sample, this composition was used to bond 3000 mil-diameter KRATON G6610 elastomer strings (12 strands/2.54 cm (12 strands/inch)) to a layer of 3 gsm polypropylene meltblown material. More particularly, the elastomer strings were stretch-bonded (at 5.5x stretch) to a necked 10.2 $gm^2$ (0.3 osy) spunbond having a necked ratio of 60%. The composition was applied at an add-on level of 3 gsm. After aging at 37.8°C (100 degrees Fahrenheit) for 90 minutes, the creeping was 5.8%.

It will be appreciated that details of the foregoing embodiments, given for purposes of illustration, are not to be construed as limiting the scope of this invention. Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention, which is defined in the following claims and all equivalents thereto. Further, it is recognized that many embodiments may be conceived that do not achieve all of the advantages of some embodiments, particularly of the preferred embodiments, yet the absence of a particular advantage shall not be construed to necessarily mean that such an embodiment is outside the scope of the present invention.

**Claims**

1. An adhesive composition, comprising:

   30 - 90% by weight of an atactic polymer having a degree of crystallinity of 20% or less selected from the group consisting of atactic polypropylene, polystyrene, polybutene, polyethylene, ethylene-propylene copolymer, and combinations thereof:
   5 - 30% by weight of an isotactic polymer having a degree of crystallinity of 40% or greater and a melt index between 50 and 3000 grams per 10 minutes, as determined by ASTM D1238, 230°C/2.16 kg method; and
   2 - 20% by weight of an elastomeric base polymer comprising styrene present in an amount up to 45% by weight.

2. The adhesive composition of claim 1, wherein the atactic polymer has a number-average molecule weight between 1,000 and 300,000 and the isotactic polymer has a number-average molecular weight between 3,000 and 200,000.

3. The adhesive composition of claim 1 or 2, wherein the atactic polymer is selected from the group consisting of atactic polypropylene, low density polyethylene having a density in a range of 0.910 to 0.935 grams per cubic centimeter, atactic polystyrene, atactic polybutene, and combinations thereof.

4. The adhesive composition of any one of the preceding claims, wherein the isotactic polymer is selected from the group consisting of: isotactic polypropylene, high density polyethylene having a density in a range of 0.935 to 0.980 grams per cubic centimeter, isotactic polystyrene, isotactic polybutene, and combinations thereof.

5. The adhesive composition of any one of the preceding claims, wherein the elastomeric base polymer comprises at least one of the group consisting of:

   styrene-isoprene-styrene (SIS) multi-block copolymer, styrene-butadiene-styrene (SBS) multi-block copolymer, styrene-ethylene-butene-styrene (SEBS) multi-block copolymer, styrene-ethylene-propylene-styrene (SEPS) multi-block copolymer, and combinations thereof.

6. The adhesive composition of any one of the preceding claims, wherein the elastomeric base polymer has a melt flow rate between 10 and 2000 grams per minute, a Shore A hardness between 20 and 70 as determined by ASTM D-5, and may be stretched to 1300% or less.

7. The adhesive composition of any one of the preceding claims, further comprising 50% or less by weight of any additive selected from the group consisting of a tackifier, an antioxidizing agent, a plasticizer, mineral oil, color pigment, filler, high softening point tackifier, low softening point additive having a softening point of 80 degrees Celsius or less and a viscosity of 1000 cps (1 Pa.s) or less at 182 degrees Celsius as determined by ASTM E-28, a polymer compatibilizer, and combinations thereof.

8. A laminated structure, comprising:

   first and second facing layers; and
   the adhesive composition of any one of the preceding claims between at least a portion of each of the first and second facing layers.

9. The laminated structure of claim 8, wherein at least one of the first and second facing layers comprises at least one of the group consisting of: a nonwoven material, a spunbond web, a meltblown web, a woven material, a hook material, a laminate, a necked-bonded laminate, a film, an elasticized component, and combinations thereof.

10. The laminated structure of claim 8 or 9, wherein the first and second facing layers are each part of a single substrate.

11. The laminated structure of any one of claims 8 to 10, wherein the laminated structure has a static-peel-failure time of 2 hours or greater, or 4 hours or greater, or 8 hours or greater, at 100 degrees Fahrenheit (37.8°C).

**12.** The laminated structure of any one of claims 8 to 11, wherein the laminated structure has a relative accretion value of 1 or less, or 0.5 or less, or 0.2 or less.

**13.** A garment comprising the laminated structure of any one of claims 8 to 12.

**14.** The laminated structure of claim 13, wherein the garment is selected from the group consisting of: personal care garments, medical garments, industrial workwear garments, diapers, training pants, swim wear, absorbent underpants, adult incontinence products, feminine hygiene products, protective medical gowns, surgical medical gowns, caps, gloves, drapes, face masks, laboratory coats, and coveralls.

**15.** A method of making the laminated structure of any one of claims 8 to 14, comprising the steps of:

forming the adhesive composition by combining between 30 and 90 wt% atactic polymer selected from the group consisting of atactic polypropylene, polystyrene, polybutene, polyethylene, ethylene-propylene copolymer, and combinations thereof having a degree of crystallinity of 20% or less and a number-average molecular weight between 1,000 and 300,000, between 5 and 30 wt% isotactic polymer having a degree of crystallinity of 40% or greater and a number-average molecular weight between 3,000 and 200,000 and a melt index between 50 and 3000 grams per 10 minutes, as determined by ASTM D 1238, 230°C/2.16 kg method, and between 2 and 20 wt% elastomeric base polymer comprising styrene present in an amount up to 45% by weight;
providing the first substrate;
providing the second substrate;
applying the adhesive composition to at least one of the first substrate and the second substrate; and
joining at least a portion of the first substrate to at least a portion of the second substrate with at least a portion of the applied adhesive composition positioned between the first substrate and second substrate.

**Patentansprüche**

**1.** Eine Haftmittelzusammensetzung, welche umfasst:

30-90 Gewichtsprozent eines ataktischen Polymers, welches einen Kristallinitätsgrad von 20% oder weniger aufweist, welches ausgewählt ist aus der Gruppe bestehend aus ataktischem Polypropylen, Polystyrol, Polybuten, Poylethylen, Etylen-Propylen Copolymer und Kombinationen davon;
5-30 Gewichtsprozent eines isotaktischen Polymers, welches einen Kristallinitätsgrad von 40% oder größer aufweist und einen Schmelzindex zwischen 50 und 3000 Gramm pro 10 Minuten, wie durch die ASTM D1238, 230°C/2.16 kg Methode bestimmt, aufweist; und
2-20 Gewichtsprozent eines elastomerischen Basispolymers, welches Styrol, vorliegend in einer Menge von bis zu 45 Gewichtsprozent umfasst.

**2.** Die Haftmittelzusammensetzung gemäß Anspruch 1, wobei das ataktische Polymer ein zahlendurchschnittliches Molekülgewicht zwischen 1.000 und 300.000 hat, und wobei das isotaktische Polymer ein zahlendurchschnittliches Molekulargewicht zwischen 3.000 und 200.000 hat.

**3.** Die Haftmittelzusammensetzung gemäß Anspruch 1 oder 2, wobei das ataktische Polymer ausgewählt ist aus der Gruppe bestehend aus: ataktischem Polypropylen, Polyethylen niedriger Dichte, welches eine Dichte in einem Bereich von 0,910 bis 0,935 Gramm pro Kubikzentimeter aufweist, atakatischem Polystyrol, ataktischem Polybuten und Kombinationen davon.

**4.** Die Haftmittelzusammensetzung gemäß einem der vorherigen Ansprüche, wobei das isotaktische Polymer ausgewählt ist aus der Gruppe bestehend aus: isotaktischem Polypropylen, Polyethylen hoher Dichte, welches eine Dichte in einem Bereich von 0,935 bis 0,980 Gramm pro Kubikzentimeter aufweist, isotaktischem Polystyrol, isotaktischem Polybuten und Kombinationen davon.

**5.** Die Haftmittelzusammensetzung gemäß einem der vorherigen Ansprüche, wobei das elastomerische Basispolymer mindestens eines umfasst aus der Gruppe bestehend aus: Styrol-Isopren-Styrol (SIS) Multi-Block Copolymer, Styrol-Butadien-Styrol (SBS) Multi-Block Copolymer, Styrol-Ethylen-Buten-Styrol (SEBS) Multi-Block Copolymer, Styrol-Ethylen-Propylen-Styrol (SEPS) Multi-Block Copolymer und Kombinationen davon.

**6.** Die Haftmittelzusammensetzung gemäß einem der vorherigen Ansprüche, wobei das elastomerische Basispolymer einen Schmelzfließindex zwischen 10 und 2.000 Gramm pro Minute aufweist, eine Shore-A-Härte zwischen 20 und 70 aufweist, wie durch ASTM D-5 bestimmt, und bis 1300% oder weniger gestreckt werden kann.

**7.** Die Haftmittelzusammensetzung gemäß einem der vorherigen Ansprüche, welche des Weiteren 50 Gewichtsprozent oder weniger von einem Additiv umfasst, welches ausgewählt ist aus der Gruppe bestehend aus: einem Klebrigmacher, einem Antioxidationsmittel, einem Weichmacher, Mineralöl, Farbpigment, Füllstoff, Klebrigmacher mit hohen Erweichungspunkt, Zusatz mit niedrigen Erweichungspunkt, welcher einen Erweichungspunkt von 80 Grad Celsius oder weniger und eine Viskosität von 1.000 cps (1 Pa.s) oder weniger bei 182 Grad Celsius aufweist, wie durch ASTM E-28 bestimmt, einem Polymer-Kompatibilisierer und Kombinationen davon.

**8.** Eine laminierte Struktur, welche umfasst:

erste und zweite gegenüberliegende Schichten; und
die Haftmittelzusammensetzung gemäß einem der vorherigen Ansprüche zwischen mindestens einem Teil von jeder der ersten und zweiten gegenüberliegenden Schichten.

**9.** Die laminierte Struktur gemäß Anspruch 8, wobei mindestens eine der ersten und zweiten gegenüberliegenden Schichten mindestens eines aus der Gruppe umfasst, welche besteht aus: einem Vliesmaterial, einer Spunbond-Bahn, einer Meltblown-Bahn, einem gewebten Material, einem Maschenmaterial, einem Laminat, einem Neckbond-Laminat, einem Film, einer elastisch gemachten Komponente und Kombinationen davon.

**10.** Die laminierte Struktur gemäß Anspruch 8 oder 9, wobei die ersten und zweiten gegenüberliegenden Schichten jeweils Teil eines einzelnen Substrats sind.

**11.** Die laminierte Struktur gemäß einem der Ansprüche 8 bis 10, wobei die laminierte Struktur eine statische Peel-Failure Zeit von 2h oder mehr aufweist, oder 4h oder mehr, oder 8h oder mehr bei 100 Grad Fahrenheit (37,8°C).

**12.** Die laminierte Struktur gemäß einem der Ansprüche 8 bis 11, wobei die laminierte Struktur einen relativen Anlagerungswert von 1 oder weniger, oder 0,5 oder weniger, oder 0,2 oder weniger aufweist.

**13.** Ein Kleidungsstück, welches die laminierte Struktur gemäß einem der Ansprüche 8 bis 12 umfasst.

**14.** Die laminierte Struktur gemäß Anspruch 13, wobei das Kleidungsstück ausgewählt ist aus der Gruppe bestehend aus: Körperpflegekleidung, medizinische Kleidung, industrielle Arbeitsbekleidung, Windeln, Trainingswindeln, Schwimmbekleidung, aufsaugender Unterwäsche, Erwachsenen-Inkontinenzprodukte, Damenhygieneprodukte, schützende medizinische Kittel, chirurgisch-medizinische Kittel, Mützen, Handschuhe, Abdecktücher, Gesichtsmasken, Laborkittel und Arbeitsoveralls.

**15.** Ein Verfahren zum Herstellen der laminierten Struktur gemäß einem der Ansprüche 8 bis 14, welches die Schritte umfasst:

Bilden der Haftmittelzusammensetzung durch Zusammenfügen von zwischen 30 und 90 Gewichtsprozent ataktischem Polymer, ausgewählt aus der Gruppe bestehend aus ataktischem Polypropylen, Polystyrol, Polybuten, Polyethylen, Ethylen-Propylen Copolymer und Kombinationen davon, welches einen Kristallinitätsgrad von 20% oder weniger und ein zahlendurchschnittliches Molekulargewicht von zwischen 1.000 und 300.000 aufweist, zwischen 5 und 30 Gewichtsprozent isotaktischem Polymer, welches einen Kristallinitätsgrad von 40% oder mehr und ein zahlendurchschnittliches Molekulargewicht von zwischen 3.000 und 200.000 und einen Schmelzindex zwischen 50 und 3.000 Gramm pro 10 Minuten aufweist, wie durch die ASTM D 1238, 230°C/2,16 kg Methode bestimmt, und
zwischen 2 und 20 Gewichtsprozent elastomerisches Basispolymer, welches Styrol vorliegend in einer Menge von bis zu 45 Gewichtsprozent umfasst;
Bereitstellen des ersten Substrats;
Bereitstellen des zweiten Substrats;
Aufbringen der Haftmittelzusammensetzung auf mindestens eines des ersten Substrats und des zweiten Substrats; und
Verbinden mindestens eines Teils des ersten Substrats mit mindestens einem Teil des zweiten Substrats wobei mindestens ein Teil der aufgebrachten Haftmittelzusammensetzung zwischen dem ersten Substrat und dem zweiten Substrat positioniert ist.

**Revendications**

1. Composition adhésive, comprenant :

   30-90 % en poids d'un polymère atactique ayant un degré de cristallinité de 20 % ou moins, sélectionné dans le groupe consistant en le polypropylène, le polystyrène, le polybutène, le polyéthylène, le copolymère-éthylène-propylène atactiques, et leurs combinaisons ;
   5-30 % en poids d'un polymère isotactique ayant un degré de cristallinité de 40 % ou plus et un indice de fusion compris entre 50 et 3000 grammes par 10 minutes, tel que déterminé par le procédé ASTM D1238, 230°C/2,16 kg ; et
   2-20 % en poids d'un polymère de base élastomère comprenant du styrène présent en une quantité allant jusqu'à 45 % en poids.

2. Composition adhésive selon la revendication 1, dans laquelle le polymère atactique a un poids moléculaire moyen en nombre compris entre 1 000 et 300 000 et le polymère isotactique a un poids moléculaire moyen en nombre compris entre 3 000 et 200 000.

3. Composition adhésive selon la revendication 1 ou 2, dans laquelle le polymère atactique est sélectionné dans le groupe consistant en le polypropylène atactique, le polyéthylène basse densité ayant une masse volumique comprise entre 0,910 et 0,935 gramme par centimètre cube, le polystyrène atactique, le polybutène atactique, et leurs combinaisons.

4. Composition adhésive selon l'une quelconque des revendications précédentes, dans laquelle le polymère isotactique est sélectionné dans le groupe consistant en le polypropylène isotactique, le polyéthylène haute densité ayant une masse volumique comprise entre 0,935 et 0,980 gramme par centimètre cube, le polystyrène isotactique, le polybutène isotactique, et leurs combinaisons.

5. Composition adhésive selon l'une quelconque des revendications précédentes, dans laquelle le polymère de base élastomère comprend l'un au moins des éléments du groupe consistant en :

   le copolymère multi-séquencé styrène-isoprène-styrène (SIS), le copolymère multi-séquencé styrène-butadiène-styrène (SBS), le copolymère multi-séquencé styrène-éthylène-butène-styrène (SEBS), le copolymère multi-séquencé styrène-éthylène-propylène-styrène (SEPS), et leurs combinaisons.

6. Composition adhésive selon l'une quelconque des revendications précédentes, dans laquelle le polymère de base élastomère a un débit d'écoulement à l'état fondu compris entre 10 et 2 000 grammes par minute, une dureté Shore A comprise entre 20 et 70 déterminée par ASTM D-5, et une extensibilité allant jusqu'à 1300 % ou moins.

7. Composition adhésive selon l'une quelconque des revendications précédentes, comprenant, en outre, 50 % ou moins, en poids, d'un additif quelconque sélectionné dans le groupe consistant en : un agent de pégosité, un agent anti-oxydant, un plastifiant, une huile minérale, un pigment coloré, une charge, un agent de pégosité à haut point de ramollissement, un additif à bas point de ramollissement ayant un point de ramollissement de 80°C ou moins et une viscosité de 1000 cps (1 Pa.s) ou moins à 182°C tel que déterminé par ASTM E-28, un agent de compatibilité entre polymères, et leurs combinaisons.

8. Structure stratifiée, comprenant :

   des première et seconde couches de façade ; et
   la composition adhésive selon l'une quelconque des revendications précédentes, entre au moins une portion de chacune des première et seconde couches de façade.

9. Structure stratifiée selon la revendication 8, dans laquelle l'une au moins des première et seconde couches de façade comprend l'un au moins des éléments du groupe consistant en : un matériau non-tissé, un voile obtenu par filage-nappage, un voile obtenu par extrusion-soufflage, un matériau tissé, un matériau à crochets, un stratifié, un stratifié lié sous striction, un film, un composant élastiqué, et leurs combinaisons.

**10.** Structure stratifiée selon la revendication 8 ou 9, dans laquelle les première et seconde couches de façade font chacune partie d'un substrat unique.

**11.** Structure stratifiée selon l'une quelconque des revendications 8 à 10, dans laquelle la structure stratifiée a un temps d'échec au pelage statique de 2 heures ou plus, ou de 4 heures ou plus, ou de 8 heures ou plus, à 100° Fahrenheit (37,8°C).

**12.** Structure stratifiée selon l'une quelconque des revendications 8 à 11, dans laquelle la structure stratifiée a une valeur d'accrétion relative de 1 ou moins, ou de 0,5 ou moins, ou de 0,2 ou moins.

**13.** Vêtement comprenant la structure stratifiée selon l'une quelconque des revendications 8 à 12.

**14.** Structure stratifiée selon la revendication 13, dans laquelle le vêtement est sélectionné dans le groupe consistant en : les vêtements d'hygiène intime, les vêtements médicaux, les vêtements de travail industriel, les couches-culottes, les culottes d'apprentissage de la propreté, les maillots de bains, les sous-vêtements absorbants, les produits pour l'incontinence adulte, les produits d'hygiène féminine, les casaques médicales de protection, les casaques médico-chirugicales, les bonnets, les gants, les champs opératoires, les masques faciaux, les blouses de laboratoire et les combinaisons.

**15.** Procédé de fabrication de la structure stratifiée selon l'une quelconque des revendications 8 à 14, comprenant les étapes de :

formation de la composition adhésive en combinant entre 30 et 90 % en poids d'un polymère atactique sélectionné dans le groupe consistant en le polypropylène, le polystyrène, le polybutène, le polyéthylène, le copolymère-éthylène-propylène atactiques, et leurs combinaisons, ayant un degré de cristallinité de 20 % ou moins et un poids moléculaire moyen en nombre compris entre
1 000 et 300 000 ; entre 5 et 30 % en poids d'un polymère isotactique ayant un degré de cristallinité de 40 % ou plus, un poids moléculaire moyen en nombre compris entre 3 000 et 200 000 et un indice de fusion compris entre 50 et 3000 grammes par 10 minutes, tel que déterminé par le procédé ASTM D1238, 230°C/2,16 kg ; et entre 2 et 20 % en poids d'un polymère de base élastomère comprenant du styrène présent en une quantité allant jusqu'à 45 % en poids ;
la fourniture d'un premier substrat ;
la fourniture d'un second substrat ;
l'application de la composition adhésive à l'un au moins du premier substrat et du second substrat ; et
la réunion d'au moins une portion du premier substrat et d'au moins une portion du second substrat avec au moins une portion de la composition adhésive appliquée, positionnée entre le premier substrat et le second substrat.

FIG. IA

FIG. IB

FIG. IC

FIG. 2

320

4

326

322

324

**FIG. 3**

320

328

322

324

**FIG. 4**

FIG. 5

FIG. 6A

FIG. 6B

FIG. 7

**EP 1 660 605 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02053668 A
- US 4135037 A
- WO 02053667 A
- US 3849241 A, Butin
- US 4340563 A, Appel
- US 3692618 A, Dorschner
- US 3802817 A, Matsuki
- US 3338992 A
- US 3341394 A, Kinney
- US 3502763 A, Hartmann
- US 3502538 A, Petersen
- US 3542615 A, Dobo
- US 5336545 A, Morman
- EP 0217032 A, Taylor
- US 5858515 A, Stokes
- US 4949668 A
- US 5110403 A
- US 5096432 A
- US 1024294 A